# EUROPEAN PATENT APPLICATION

(11) **EP 4 714 699 A1**
(43) Date of publication of application: **25.03.2026**
(21) Application number: 25199533.8
(22) Date of filing: 02.09.2025
(51) Int. Cl.: B60K 1/04, B62D 25/02, B62D 25/20

(54) **SIDE STRUCTURE FOR ELECTRIC VEHICLE**

(30) Priority: 18.09.2024 JP 2024161189
(71) Applicant: Suzuki Motor Corporation, Shizuoka 432-8611 (JP)
(72) Inventor: ARAI, Hayato, HAMAMATSU-SHI, 432-8611 (JP); SASAKI, Makoto, HAMAMATSU-SHI, 432-8611 (JP)
(74) Representative: Plasseraud IP

(57) **Abstract**

[Problem to be Solved] To protect a battery pack installed on the lower side of a floor from an impact load.

[Solution] A side structure for an electric vehicle includes a side member 20 disposed outside a battery pack 10, a side sill 40 disposed outside the side member 20, and a battery mounting member 30 joined to a lower portion of the side member 20 to suspend the battery pack 10. The battery mounting member 30 extends toward the lower side of the vehicle from a lower surface of the side member 20 and extends in the front-rear direction.

## Description

### [Technical Field]

The present invention relates to side structures for electric vehicles.

### [Background Art]

For example, as disclosed in Patent Literature 1, an electric vehicle includes a battery pack disposed on the lower side of a floor panel forming a floor portion of a vehicle. In this example, an electric motor for driving is disposed on the vehicle front side of the battery pack.

In order to extend the cruising range of the electric vehicle, an increase in the capacity of the battery pack is desired. As a result, battery packs are becoming larger. As the battery pack is increased in size, the battery pack takes up a larger proportion of the space on the lower side of the floor portion.

In the electric vehicle, space needs to be ensured on the lower side of the floor panel to dispose the battery pack. In the structure of the above example, a floor panel is disposed on the upper side of side members disposed on both sides in the vehicle width direction. The battery pack is disposed between both side members on the lower side of the floor panel.

The side members of the above example are members that ensure rigidity of the vehicle body, and need to be strong enough to resist an impact load acting on the vehicle body due to a side collision, a frontal collision, and the like, for example. In order to set the vehicle widthwise dimension of the battery pack to be as large as possible, an outer side portion of the battery pack in the vehicle width direction and an inner side portion of the side member in the vehicle width direction are disposed closer to each other.

### [Citation List]

### [Patent Literature]

[Patent Literature 1] JP 2021-104759 A

### [Summary of Invention]

### [Problem to be Solved by the Invention]

A certain strength against an impact load of a side collision or the like needs to be ensured for a side portion of a lower portion of the vehicle body, and a structure for absorbing the impact of a side collision or the like is provided in the side portion. For example, a structure for absorbing impact absorbs an impact load by deforming a side portion of the vehicle body. Therefore, a stroke for deformation needs to be provided in the side portion of the vehicle body.

However, when a structure for absorbing impact is to be provided on the outer side in the vehicle width direction of a highly rigid side member, since the space on the outer side in the vehicle width direction of the side member is narrow in the structure of the above example, it may be difficult to ensure a sufficient stroke for the vehicle body side portion to deform to absorb impact. For this reason, in the structure of the above example, there has been room for improvement in effectively absorbing an impact load due to a side collision or the like in a space on the outer side in the vehicle width direction of a battery pack in a side portion of a lower portion of the vehicle body.

The present invention has been made to solve the above problem, and an object of the invention is to provide a side structure for an electric vehicle in which a battery pack can be installed in a limited space on the lower side of a vehicle floor portion to protect the battery pack from an impact load.

### [Means for Solving the Problem]

A side structure for an electric vehicle according to the present invention for achieving the above object includes: a battery pack disposed on the lower side of a floor portion of a vehicle; a side member disposed on the outside in a vehicle width direction of the battery pack on the lower side of the floor portion and extending in a front-rear direction of the vehicle; and a side sill that is disposed on the outside in the vehicle width direction of the side member while being spaced apart from the side member and extends in the front-rear direction of the vehicle. The side structure for an electric vehicle includes a battery mounting member joined to a lower portion of the side member to suspend the battery pack, and the battery mounting member extends toward the lower side of the vehicle from a lower surface of the side member and extends in the front-rear direction of the vehicle.

### [Advantageous Effect of Invention]

According to the present invention, a battery pack can be installed in a limited space on the lower side of a vehicle floor portion to protect the battery pack from an impact load.

### [Brief Description of Drawings]

[Figure 1] Figure 1 is a perspective view of a side structure for an electric vehicle according to the present invention as viewed from the upper side of a floor portion of an electric vehicle.
[Figure 2] Figure 2 is a perspective view of a left side portion in a state in which a side body outer panel is attached to the electric vehicle of Figure 1 as viewed from the lower side of the vehicle.
[Figure 3] Figure 3 is a bottom view of the side structure for an electric vehicle of Figure 1 as viewed from the lower side of the vehicle.
[Figure 4] Figure 4 is an enlarged perspective view of a battery mounting member, a battery suspension bracket, and other parts of Figure 3 as viewed from the lower side of the vehicle.
[Figure 5] Figure 5 is an enlarged bottom view illustrating a state in which a battery pack of Figure 3 is removed.
[Figure 6] Figure 6 is a perspective view of a cross section taken along A-A of Figure 3 as viewed from the vehicle rear.
[Figure 7] Figure 7 is an end view along arrow B-B of Figure 5, in which the battery pack and the battery suspension bracket are added.
[Figure 8] Figure 8 is a cross-sectional view along arrow B-B of Figure 5, in which the battery suspension bracket is added.

### [Mode for Carrying Out the Invention]

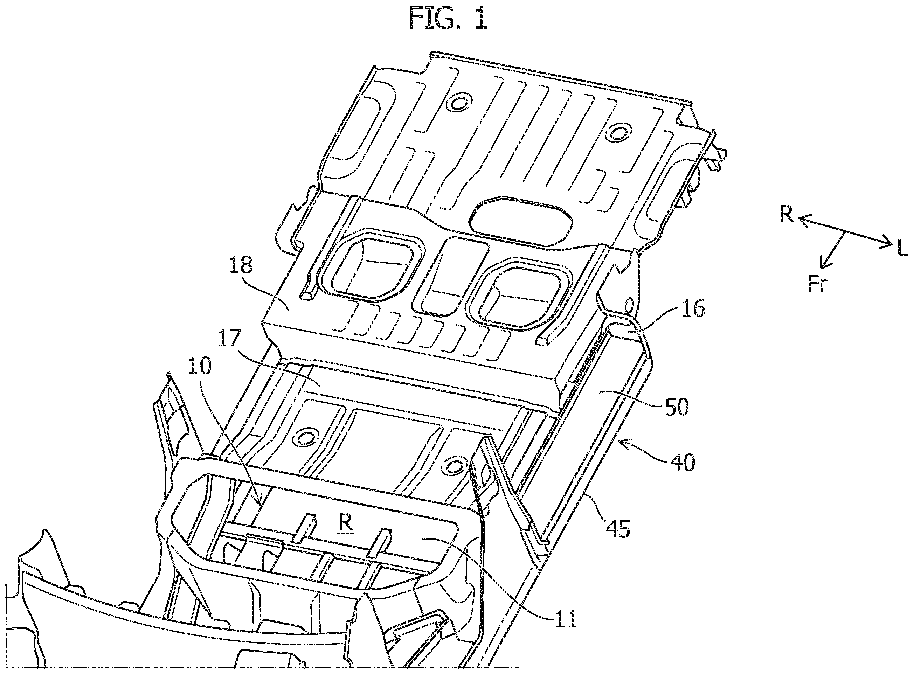

Hereinafter, an embodiment of a side structure for an electric vehicle according to the present invention will be described with reference to the drawings (Figures 1 to 8). Note that in the drawings, an arrow Fr direction indicates the forward direction in the front-rear direction of the vehicle. In the description of the embodiment, "front portion (front end) and rear portion (rear end)" correspond to a front portion and a rear portion in the front-rear direction of the vehicle. Additionally, an arrow R and an arrow L indicate the right side and the left side when an occupant faces the vehicle front. Furthermore, an arrow U indicates the upper side in the up-down direction of the vehicle.

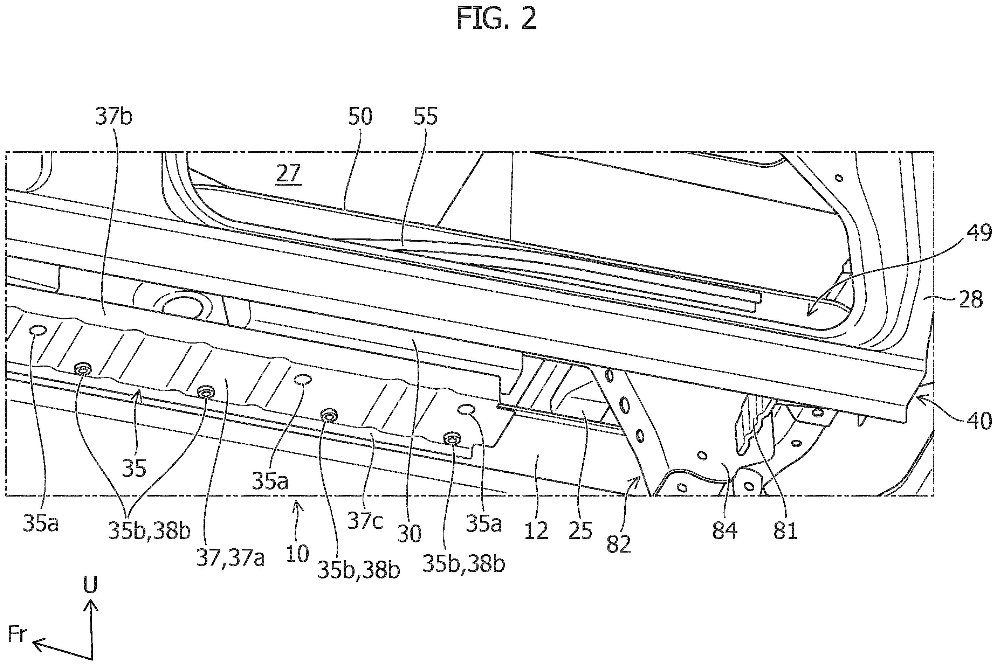

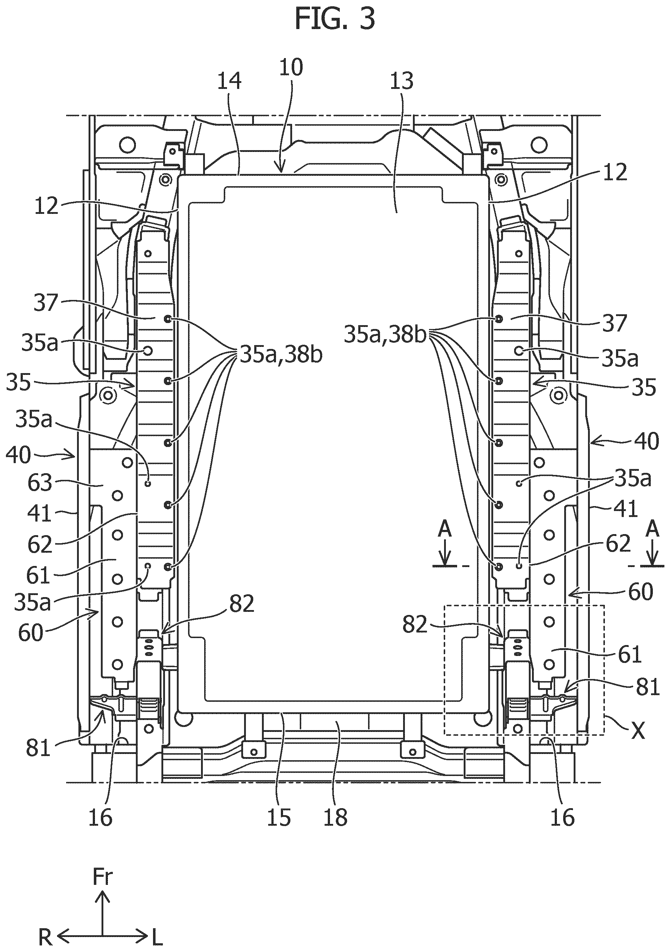

As illustrated in Figures 2 to 4, the side structure for an electric vehicle of the present embodiment includes a battery pack 10 disposed on the lower side of a floor portion. Furthermore, as illustrated in Figure 3, the side structure includes a side member 20, a side sill 40, a battery mounting member 30, a battery suspension bracket 35, and cross members 71, 75. In the present embodiment, the battery mounting member 30 extends to the lower side of the vehicle from a lower surface of the side member 20, and extends in the front-rear direction of the vehicle. Hereinafter, members forming a lower structure of the present embodiment will be described.

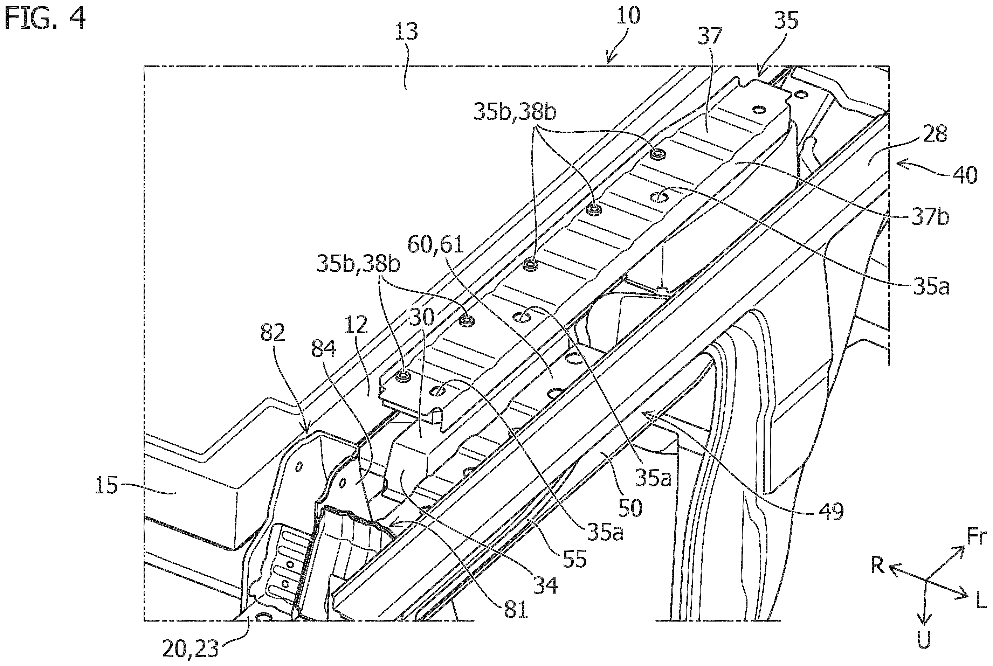

As illustrated in Figures 1 and 3, the battery pack 10 is a so-called heavy object disposed on the lower side of a floor panel 17 forming the floor portion of the vehicle. Although descriptions of the detailed structure of the battery pack 10 are omitted, the external shape of the battery pack 10 is a substantially rectangular parallelepiped shape, and includes an upper surface portion 11, left and right side wall portions 12, a lower surface portion 13, a front wall portion 14, and a rear wall portion 15 (Figures 3 and 4). The battery pack 10 is suspended from a member forming the vehicle body such as the side member 20 via the battery mounting member 30 and the battery suspension bracket 35, for example. The battery pack 10 attachment structure will be described later.

The side member 20 is a highly rigid member forming the framework of the vehicle body, and is formed of a metal material. As illustrated in Figure 3, the side member 20 is disposed in a pair on both sides in the vehicle width direction in a lower portion of the vehicle, and extend in the front-rear direction of the vehicle. In this example, the side members 20 are disposed along and on the outer side in the vehicle width direction of the left and right side wall portions 12 of the battery pack 10 while being spaced apart from them. In the front-rear direction of the vehicle, a front portion of the side member 20 is disposed on the vehicle front side of the front wall portion 14 of the battery pack 10, and a rear portion of the side member 20 is disposed on the vehicle rear side of the rear wall portion 15 of the battery pack 10.

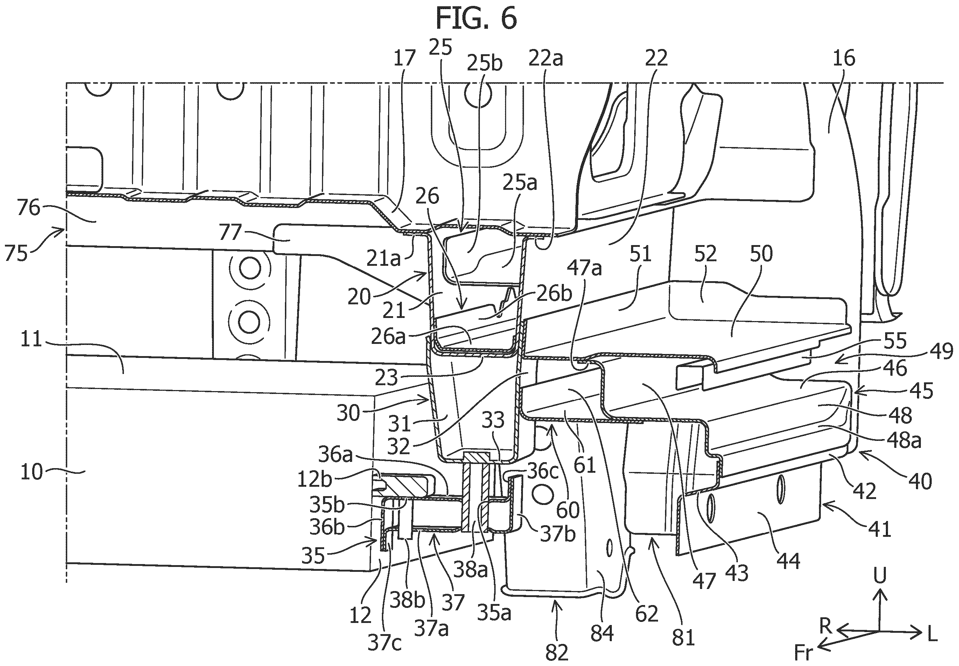

As illustrated in Figures 6 to 8, the side member 20 has a U-shaped cross-sectional shape open to the upper side of the vehicle. That is, the side member 20 includes an inner wall portion 21, an outer wall portion 22, and a bottom surface portion 23, and the bottom surface portion 23 includes a substantially rectangular horizontal surface extending in the front-rear direction of the vehicle. The inner wall portion 21 protrudes upward from the vehicle widthwise inner end of the bottom surface portion 23, and extends in the front-rear direction of the vehicle. An inner flange portion 21a protruding inward in the vehicle width direction is provided at the upper end of the inner wall portion 21. The outer wall portion 22 protrudes upward from the vehicle widthwise outer end of the bottom surface portion 23, and extends in the front-rear direction of the vehicle. An outer flange portion 22a protruding outward in the vehicle width direction is provided at the upper end of the outer wall portion 22. The inner flange portion 21a and the outer flange portion 22a are joined to a lower surface of the floor panel 17 by spotwelding.

In the present embodiment, as illustrated in Figure 6, an upper reinforcement plate 25 and a lower reinforcement plate 26 are provided inside the side member 20. The upper reinforcement plate 25 includes a flat surface portion 25a extending in the front-rear direction of the vehicle and flange portions 25b protruding upward from both ends in the vehicle width direction of the flat surface portion 25a. The flange portions 25b on both sides are joined to the inner wall portion 21 and the outer wall portion 22 of the side member 20. Note that the flat surface portion 25a of the upper reinforcement plate 25 is disposed on the lower side of the floor panel 17 while being spaced apart from the floor panel 17. As illustrated in Figures 6 to 8, similar to the upper reinforcement plate 25, the lower reinforcement plate 26 includes a flat surface portion 26b and a flange portion 26a. The flat surface portion 26a of the lower reinforcement plate 26 is joined to the bottom surface portion 23 of the side member 20. Additionally, the flange portion 26b of the lower reinforcement plate 26 is joined to the inner wall portion 21 and the outer wall portion 22 of the side member 20.

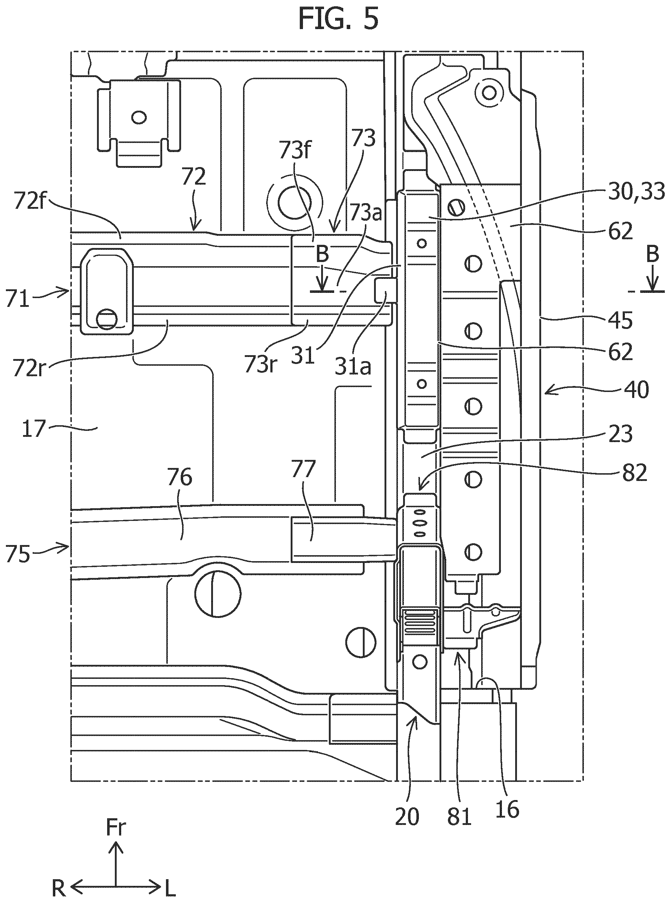

Next, the cross member will be described. As illustrated in Figure 5, cross members 71, 75 are highly rigid members forming the framework of the vehicle body, and are formed of a metal material. The cross members 71, 75 of the present embodiment include the first cross member 71 and the second cross member 75 disposed on the vehicle rear side of the first cross member 71. Note that the cross members 71, 75 are not limited to the first cross member 71 and the second cross member 75.

As illustrated in Figure 5, the first cross member 71 includes a first central member 72 and a first extension member 73. The first central member 72 is a member extending in the vehicle width direction, and has a U-shaped cross section open to the upper side. **In** addition, a front flange portion 72f and a rear flange portion 72r are provided at the upper end of a front portion and the upper end of a rear portion of the first central member 72, respectively. The front flange portion 72f and the rear flange portion 72r are joined to the lower surface of the floor panel 17 by spotwelding.

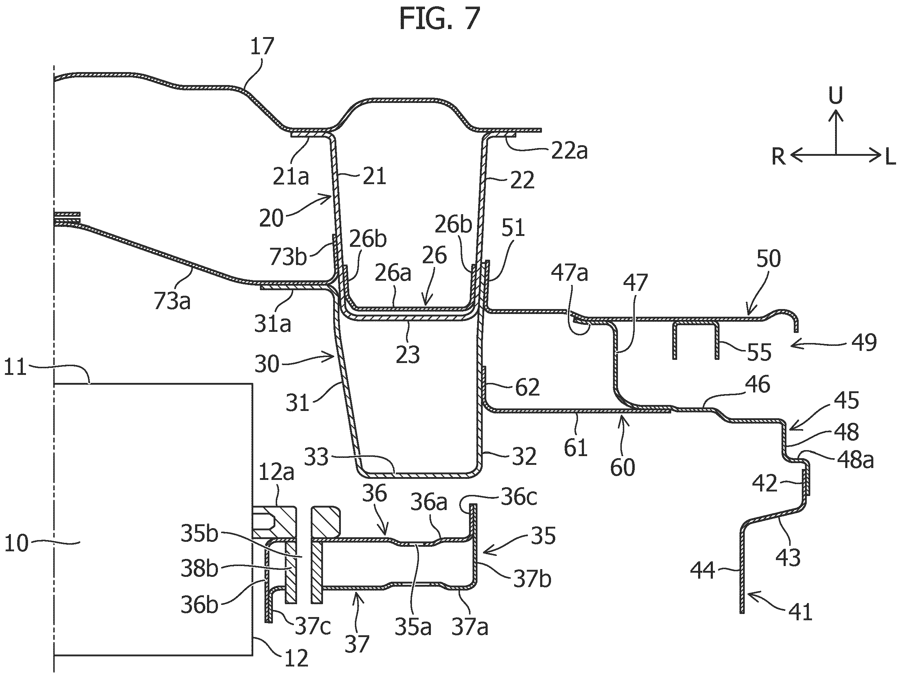

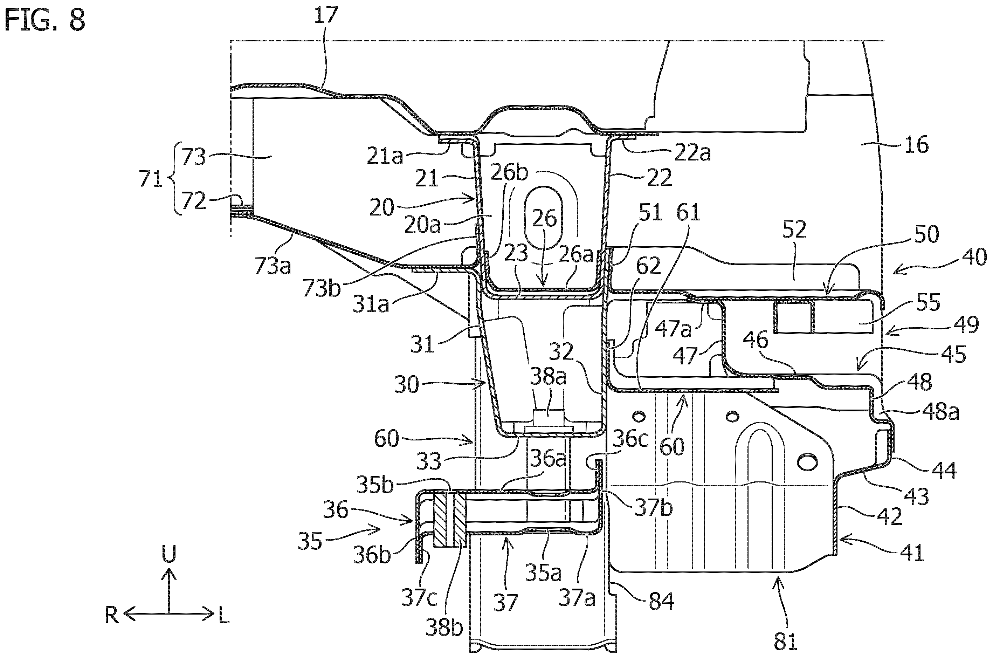

The first extension member 73 is a member extending outward in the vehicle width direction from an outer side portion in the vehicle width direction of the first central member 72. The outer side portion of the first central member 72 and an inner side portion of the first extension member 73 are preferably joined by spotwelding, for example. Furthermore, as illustrated in Figures 7 and 8, a lower surface portion 73a of the first extension member 73 is inclined toward the lower side of the vehicle from a vehicle widthwise middle portion toward the outside in the vehicle width direction. Additionally, a vertical flange portion 73b protruding toward the upper side of the vehicle is provided at the vehicle widthwise outer end of the lower surface portion 73a. The vertical flange portion 73b is joined to the inner wall portion 21 of the side member 20 by spotwelding. Additionally, as illustrated in Figure 5, a flange 31a provided in the battery mounting member 30, described later, is joined to an outer side portion in the vehicle width direction of the lower surface portion 73a by spotwelding.

Although not illustrated, a flange portion protruding frontward is provided in a vehicle widthwise end portion of a front wall of the first extension member 73, and a flange portion protruding rearward is provided in a vehicle widthwise end portion of a rear wall of the first extension member 73. Similar to the vertical flange portion 73b, these flange portions are joined to the inner wall portion 21 of the side member 20 by spotwelding.

As illustrated in Figure 5, similar to the first central member 72, the first extension member 73 has a U-shaped cross section open to the upper side, and a front flange portion 73f and a rear flange portion 73r are provided at the upper end of a front portion and the upper end of a rear portion. The front flange portion 73f and the rear flange portion 73r are joined to the inner flange portion 21a of the side member 20 by spotwelding.

As illustrated in Figure 5, similar to the first cross member, the second cross member 75 includes a second central member 76 and a second extension member 77. Similar to the first central member 72, the second central member 76 extends in the vehicle width direction and is joined to the lower surface of the floor panel 17. The second extension member 77 is a member extending outward in the vehicle width direction from an outer side portion in the vehicle width direction of the second central member 76, and an outer side portion of the second central member 76 and an inner side portion of the second extension member 77 are preferably joined by spotwelding, for example.

An outer side portion in the vehicle width direction of the second extension member 77 is joined to a hanger member 82 and the like. The hanger member 82 is a member provided in the side member 20. A trailing arm (not illustrated) is coupled to the hanger member 82. **In** this example, as illustrated in Figures 6 and 8, the hanger member 82 is a member extending toward the lower side of the vehicle from a lower surface of the side member 20, and is a highly rigid member formed of a metal material. Load is applied to the hanger member 82 via the trailing arm. Therefore, the hanger member 82 has enough rigidity to withstand the load.

Next, the battery mounting member 30 will be described. **In** the present embodiment, two battery mounting members 30 are disposed while being spaced apart from each other in the front-rear direction of the vehicle along the bottom surface portion 23 of the side member 20. Each battery mounting member 30 is formed of a metal material and has high rigidity. Each battery mounting member 30 is a member extending in the front-rear direction of the vehicle and is joined to a lower portion of the side member 20.

**In** other words, the battery mounting member 30 of the present embodiment is disposed next to the side member 20 on the lower side thereof. A highly rigid vehicle body frame can be formed by the side member 20 and the battery mounting member 30. Additionally, since the side member 20 and the battery mounting member 30 are disposed next to each other on upper and lower sides, the side member 20 and the battery mounting member 30 protect the outside in the vehicle width direction of the battery pack 10 as a protection wall having a certain up-down direction length (height) and extending in the front-rear direction of the vehicle.

Here, the structure of the battery mounting member 30 will be described. As illustrated in Figures 6 to 8, the battery mounting member 30 includes an inner wall portion 31, an outer wall portion 32, and a bottom surface portion 33, and has a U-shaped cross section as does the side member 20.

An upper portion of the inner wall portion 31 of the battery mounting member 30 is joined to the inner wall portion 21 of the side member 20 by spotwelding. Similarly, an upper portion of the outer wall portion 32 of the battery mounting member 30 is joined to the outer wall portion 22 of the side member 20 by spotwelding. As a result, the battery mounting member 30 and the bottom surface portion 23 of the side member 20 form a closed sectional structure in cross section. With this configuration, rigidity increases, and the battery pack 10 can be suspended stably.

As illustrated in Figure 5, a middle portion in the front-rear direction of the vehicle of the inner wall portion 31 of the battery mounting member 30 is provided with the flange 31a joined to the first cross member 71. The flange 31a is joined to a lower surface of the first cross member 71 by spotwelding. Since the first cross member is joined to the battery mounting member 30 and joined to the side member 20 as described above, a highly rigid vehicle body frame can be formed.

As illustrated in Figures 4 and 8, a closing portion 34 is provided at the front end and rear end of the battery mounting member 30. The closing portion 34 has a plate shape joined to the inner wall portion 31, the outer wall portion 32, and the bottom surface portion 33 of the battery mounting member 30. Furthermore, a flange is provided at the upper end of the closing portion 34, and the flange is joined to the bottom surface portion 23 of the side member 20. As a result, a closed space is formed inside the battery mounting member 30, and a closed sectional structure is formed in the plane cross section of the battery mounting member 30. Thus, the battery mounting member 30 can ensure high rigidity.

Next, the side sill 40 of the present embodiment will be described. The side sill 40 is disposed in a lower portion of a door opening 27 provided in a vehicle side portion and extends in the front-rear direction of the vehicle to form the framework of the vehicle body as does the side member 20. Additionally, a front portion of the side sill 40 preferably bulges toward the inside of the vehicle to be joined to an inner side portion in the vehicle width direction of the side member 20. As illustrated in Figures 6 to 8, the side sill 40 includes a lower inner panel 41, an upper inner panel 45, an inner reinforcement panel 60, and an upper outer panel 50. The side sill 40 further includes an outer portion disposed in an outermost part of the vehicle. As illustrated in Figures 2 and 4, in the present embodiment, the outer portion of the side sill 40 is formed of a part of a side body outer panel 28 forming the outermost part of the vehicle. The outer portion of the side sill 40 is preferably disposed so as to cover the lower inner panel 41 and the upper inner panel 45 from the outside in the vehicle width direction.

As illustrated in Figures 1 and 6, the upper outer panel 50 extends horizontally in the front-rear direction of the vehicle, and an upper surface of the upper outer panel 50 functions as a footrest for occupants getting in and out of the vehicle through the door opening 27. In the present embodiment, the battery pack 10 is mounted on the lower side of the floor portion and the floor portion is set to be slightly high. Hence, the upper outer panel 50 is effective as a footrest. Although omitted from the drawing, a bead may be provided on the upper surface of the upper outer panel 50 to reduce slipping, for example. **In** this case, the bead may be formed so as to extend in the vehicle width direction, or may be formed so as to extend slightly inclined with respect to the vehicle width direction. A door rail 55 along which a slide door (not illustrated) slides is joined to the lower surface of the upper outer panel 50.

An upper flange portion 51 protruding upward is provided on the inside in the vehicle width direction of the upper surface of the upper outer panel 50. The upper flange portion 51 is joined to the outer wall portion 22 of the side member 20 by spotwelding. Additionally, a rear flange portion 52 protruding upward is provided at the rear end of the upper surface of the upper outer panel 50. For example, as illustrated in Figures 6 and 8, the rear flange portion 52 is joined to a side panel 16 disposed outside an upper floor panel 18 by spotwelding, for example. **In** this example, a cushion portion of a rear seat (not illustrated) is installed in the upper floor panel 18.

As illustrated in Figures 6 to 8, the upper inner panel 45 is a panel that covers the door rail 55 from the inside in the vehicle width direction and the lower side of the vehicle. The upper inner panel 45 includes a bottom surface portion 46, an inner wall portion 47, an upper flange portion 47a, and an outer wall portion 48. The bottom surface portion 46 is disposed while being spaced apart from a lower surface of the upper outer panel 50 to the lower side. The bottom surface portion 46 is substantially horizontal and extends in the front-rear direction of the vehicle. The bottom surface portion 46 is disposed while being spaced apart from the lower side of the door rail 55, and covers the door rail 55 from the lower side.

The inner wall portion 47 extends upward from the inside in the vehicle width direction of the bottom surface portion 46 to the lower surface of the upper outer panel 50. The inner wall portion 47 is disposed on the inside in the vehicle width direction of the door rail 55 while being spaced apart from the door rail 55, and is disposed so as to cover the door rail 55 from the inside in the vehicle width direction. The upper flange portion 47a is a portion protruding outward in the vehicle width direction from the upper end of the inner wall portion 47, and is joined to the lower surface of the upper outer panel 50 by spotwelding. For example, a lower arm provided in a lower portion of the slide door is disposed in a space formed by the upper outer panel 50, the inner wall portion 47 of the upper inner panel 45, and the bottom surface portion 46 and slides on the door rail 55.

The outer wall portion 48 of the upper inner panel 45 is a wall portion extending downward from the vehicle widthwise outer end of the bottom surface portion 46. As illustrated in Figure 6, a stepped portion 48a is provided in a middle portion in the up-down direction of the vehicle of the outer wall portion 48. The lower side of the stepped portion 48a is disposed on the outside in the vehicle width direction of the upper side of the stepped portion 48a. By providing the stepped portion 48a, rigidity in the front-rear direction of the vehicle can be improved. The outer wall portion 48 located on the lower side of the stepped portion 48a is joined to the lower inner panel 41 by spotwelding, for example.

Next, the lower inner panel 41 will be described. As illustrated in Figures 6 to 8, the lower inner panel 41 is a panel disposed on the lower side of the upper inner panel 45. The lower inner panel 41 includes an outer wall portion 42, an inclined surface portion 43, and an inner wall portion 44. The outer wall portion 42 is a side wall facing the outside in the vehicle width direction and extends in the front-rear direction of the vehicle. An upper portion of the outer wall portion 42 of the lower inner panel 41 is joined to the inside of a lower portion of the outer wall portion 48 of the upper inner panel 45 by spotwelding.

As illustrated in Figures 6 to 8, the inclined surface portion 43 of the lower inner panel 41 is a portion extending while being inclined toward the lower side of the vehicle from the lower end of the outer wall portion 42 toward the inside in the vehicle width direction. Additionally, the inner wall portion 44 is a side wall extending toward the lower side of the vehicle from the vehicle widthwise inner end of the inclined wall portion. In the vehicle width direction, the inner wall portion 44 of the lower inner panel 41 is disposed below the door rail 55.

Next, the inner reinforcement panel 60 will be described. The inner reinforcement panel 60 is a member disposed on the inside in the vehicle width direction of the lower inner panel, and is formed of a metal material. In the present embodiment, the inner reinforcement panel 60 is configured to connect the upper inner panel 45 and the battery mounting member 30.

The inner reinforcement panel 60 of the present embodiment includes a flat surface portion 61 extending in the vehicle width direction, and a vertical wall portion 62 protruding upward from the vehicle widthwise inner end of the flat surface portion 61 and extending in the front-rear direction of the vehicle. Furthermore, a protrusion 63 protruding outward in the vehicle width direction is provided in a front portion of an outer side portion in the vehicle width direction of the flat surface portion 61.

An upper surface of the outer side portion in the vehicle width direction of the flat surface portion 61 of the inner reinforcement panel 60 is joined to a lower surface of the bottom surface portion 46 of the upper inner panel 45 by spotwelding. The vertical wall portion 62 of the inner reinforcement panel 60 is joined to the outer wall portion 32 of the battery mounting member 30 by spotwelding. Note that the vehicle widthwise rigidity of the inner reinforcement panel 60 is preferably set lower than the vehicle widthwise rigidity of the battery mounting member 30 and side member 20.

Here, a configuration in which the battery pack 10 is suspended from the vehicle body will be described. The battery pack 10 is suspended from the vehicle body such as the side member 20 via the battery mounting member 30 and the battery suspension bracket 35. As illustrated in Figures 6 to 8, the battery suspension bracket 35 is suspended from the bottom surface portion 33 of the battery mounting member 30 via a coupling member 38a, and is disposed below the bottom surface portion 33 of the battery mounting member 30.

As illustrated in Figures 2 to 4, the battery suspension bracket 35 of the present embodiment is a substantially rectangular parallelepiped member extending in the front-rear direction of the vehicle, and is disposed along the side wall portion 12 of the battery pack 10. As illustrated in Figures 6 to 8, the battery suspension bracket 35 includes an upper member 36 and a lower member 37.

As illustrated in Figures 6 to 8, the upper member 36 includes an upper surface portion 36a, an inner wall portion 36b, and an outer flange portion 36c. The upper surface portion 36a is disposed on the lower side of a lower surface of the bottom surface portion 33 of the battery mounting member 30 while being spaced apart from the lower surface of the bottom surface portion 33. The outer flange portion 36c is a portion protruding upward from the vehicle widthwise outer end of the upper surface portion 36a and extending in the front-rear direction of the vehicle. The inner wall portion 36b is a wall portion extending toward the lower side of the vehicle from the vehicle widthwise inner end of the upper surface portion 36a, and is disposed on the outside in the vehicle width direction of the side wall portion 12 of the battery pack 10 while being spaced apart from the side wall portion 12.

As illustrated in Figures 6 to 8, the lower member 37 includes a bottom surface portion 37a, an outer wall portion 37b, and an inner flange portion 37c. The bottom surface portion 37a is disposed on the lower side of the upper surface portion 36a of the upper member 36 while being spaced apart from the upper surface portion 36a. The outer wall portion 37b is a wall portion extending toward the upper side of the vehicle from the vehicle widthwise outer end of the bottom surface portion 37a. Furthermore, in the vehicle width direction, the outer wall portion 37b is disposed slightly inward in the vehicle width direction of the outer wall portion 32 of the battery mounting member 30 below the bottom surface portion 33 of the battery mounting member 30.

An upper portion of the outer wall portion 37b of the lower member 37 protrudes further to the upper side than the upper surface portion 36a, and is joined to the outer flange portion 36c by spotwelding. The inner flange portion 37c is a portion protruding downward from the vehicle widthwise inner end of the bottom surface portion 37a and extending in the front-rear direction of the vehicle. A lower portion of the inner wall portion 36b of the upper member 36 is joined to the inner flange portion 37c by spotwelding.

Additionally, as illustrated in Figures 6 to 8, a plurality of outer coupling portions 35a and a plurality of inner coupling portions 35b are provided in the battery suspension bracket 35. As illustrated in Figures 2 to 4, the plurality of outer coupling portions 35a are spaced apart from each other along the longitudinal direction (front-rear direction of vehicle) of the battery suspension bracket 35 outside the vehicle widthwise center of the battery suspension bracket 35. The outer coupling portion 35a is coupled to the bottom surface portion 33 of the battery mounting member 30 via the coupling member 38a.

The plurality of inner coupling portions 35b are spaced apart from each other along the longitudinal direction (front-rear direction of vehicle) of the battery suspension bracket 35 inside the vehicle widthwise center of the battery suspension bracket 35. The inner coupling portion 35b is preferably disposed inward of the outer coupling portion 35a. The inner coupling portion 35b is a portion coupled to a protrusion 12a protruding outward in the vehicle width direction from the side wall portion 12 of the battery pack 10. The protrusion 12a and the inner coupling portion 35b are coupled by a coupling member 38b. Note that the protrusion 12a may protrude outward in the vehicle width direction from the side wall portion 12 and extend in the front-rear direction of the vehicle.

As described above, the battery pack 10 is suspended from the battery suspension bracket 35 via the coupling member 38b, and the battery suspension bracket 35 is coupled to the battery mounting member 30 via the coupling member 38a.

In the side structure of the present embodiment, the battery pack 10 is disposed on the vehicle inner side of the side member 20 and the battery mounting member 30. For example, when an impact load of a side collision or the like is received, impact of the colliding object on the battery pack 10 needs to be reduced. In the present embodiment, the highly rigid side member 20 and battery mounting member 30 are disposed on the outside in the vehicle width direction of the battery pack 10. Therefore, the impact load can be stably received by the highly rigid members.

For example, an impact load generated by a side collision or the like is first input to the vehicle widthwise outer end (e.g., lower portion of side body outer panel 28) of the side sill 40. A part of the impact load input to the side sill 40 is absorbed by inward deformation of the side sill 40 in the vehicle width direction. For example, a part of the impact energy is converted into deformation energy. For example, a part of the impact load is preferably absorbed by crushing deformation of the inner reinforcement panel 60 joined to the outer wall portion 32 of the battery mounting member 30.

For example, when the impact load is input to the inner reinforcement panel 60, the inner reinforcement panel 60 deforms so as to be crushed in the vehicle width direction while resisting the impact load. The impact energy input to the inner reinforcement panel 60 is converted into deformation energy by the crushing deformation of the inner reinforcement panel 60. As a result, a part of the impact load is absorbed by the inner reinforcement panel 60.

**In** the present embodiment, since the side sill 40 has a structure capable of absorbing impact, an impact load transmitted to the battery mounting member 30 can be reduced. That is, since a member (e.g., inner reinforcement panel 60) forming the side sill 40 absorbs the impact load, the impact energy of the impact load input to the battery mounting member 30 is reduced. **In** addition, since the battery mounting member 30 has higher rigidity than the inner reinforcement panel 60, it can receive the impact load with reduced impact energy. Therefore, according to the structure of the present embodiment, an impact load transmitted to a rear portion of the battery pack 10 can be reduced to protect the battery pack 10 from the impact load.

Furthermore, in the present embodiment, as described above, the side sill 40 is disposed on the outside in the vehicle width direction of the battery mounting member 30. Furthermore, the side sill 40 and the battery mounting member 30 overlap in side view. When an impact load of a side collision is received, the impact load can be received by the side sill 40 before being transmitted to the battery mounting member 30.

As described above, since an impact absorption structure is provided in the side sill 40, a part of the impact load acting in the vehicle width direction is absorbed by the side sill 40. As a result, an impact load transmitted to the battery mounting member 30 is mitigated. Hence, in the above configuration, it is possible to reduce transmission of an impact load to the battery pack 10.

Furthermore, as described above, in the present embodiment, upper portions of the battery mounting member are joined to lower portions of both side portions of the side member, and the vehicle widthwise outer side portion of the first cross member is joined to the vehicle widthwise inner side portion of the side member.

The upper ends of the inner wall portion 31 and outer wall portion 32 of the battery mounting member 30 are disposed on the inner wall portion 21 and outer wall portion 22 of the side member 20, and the inner wall portions 21 and 31 are joined to each other while the outer walls 22 and 32 are joined to each other. As a result, the inner wall portion 21 and outer wall portion 22 of the side member 20 are effectively extended downward.

Since the battery mounting member 30 is thus joined to the side member 20, the impact load transmitted from the side sill 40 can be received by the side member 20 and the battery mounting member 30. Furthermore, since the outer wall portion 22 of the side member 20 is extended downward as described above, the area of the outer wall portion is effectively increased, so that the load can be received on a wider area. As a result, the load can be distributed efficiently.

The side member 20 is longer in the front-rear direction of the vehicle than the battery mounting member 30. Therefore, a load input to the battery mounting member 30 can be transmitted to the side member 20 and be efficiently transmitted to front and rear portions of the vehicle, whereby the load can be distributed efficiently.

Furthermore, the side member 20 and the battery mounting member 30 are supported by the first cross member 71, so that a load input to the side member 20 and the battery mounting member 30 from the inner reinforcement panel 60 can be transmitted to the first cross member 71. As a result, the load is distributed efficiently, and load input to the battery pack 10 is reduced.

Furthermore, in the present embodiment, the battery mounting member is disposed so as to overlap a part of the battery pack in side view. Furthermore, the battery suspension bracket 35 is provided in a lower portion of the battery mounting member, and the lower end of the battery pack is disposed on the vehicle lower side of the lower end of the battery mounting member.

For example, an impact load of a side collision is transmitted to the battery mounting member 30 as described above. A part of the load transmitted to the battery mounting member 30 is transmitted upward toward the side member 20, and another part of the load is transmitted downward toward the battery suspension bracket 35 via the coupling member and the like. In the present embodiment, the battery pack 10 is suspended below the battery mounting member 30. That is, the suspension position of the battery pack 10 (e.g., position of protrusion 12a) is lower than the battery mounting member 30. Therefore, since the aforementioned suspension position is shifted downward with respect to the load transmitted inward in the vehicle width direction from the battery mounting member 30, the transmitted load is reduced.

Additionally, in the present embodiment, an inner side portion in the vehicle width direction of the battery mounting member 30 is inclined outward in the vehicle width direction from the lower end of the side member 20 toward the lower side of the vehicle. That is, the inner wall portion 31 of the battery mounting member 30 is inclined outward in the vehicle width direction toward the lower side of the vehicle. With this configuration, when a load from the outside to the inside in the vehicle width direction is transmitted to the battery mounting member 30, it can be efficiently transmitted to a lower surface portion 71a of the first cross member 71 via the flange 31a, for example. Additionally, by providing an inclination, a deformation stroke can be ensured even when the battery mounting member 30 deforms toward the inside of the vehicle, and load transmission to the battery pack 10 can be reduced.

Furthermore, in the present embodiment, as described above, the side sill 40 includes the upper outer panel 50 extending in the front-rear direction of the vehicle, the bottom surface portion 46 of the upper inner panel 45 disposed on the lower side of the upper outer panel 50 while being spaced apart from the upper outer panel 50, and the inner wall portion 47 extending toward the upper side of the vehicle from the vehicle widthwise inner end of the bottom surface portion 46 and joined to the lower surface of the upper outer panel 50. Additionally, as illustrated in Figure 4 and Figures 6 to 8, an opening 49 open in the vehicle width direction and extending in the front-rear direction of the vehicle is provided in an outer side portion in the vehicle width direction of the side sill 40, the upper outer panel 50 is disposed in an upper portion of the opening 49, and the bottom surface portion 46 of the upper inner panel 45 is disposed in a lower portion of the opening 49. The door rail 55 is attached to a lower surface of the upper outer panel 50 located on the outside in the vehicle width direction of the inner wall portion 47, and the inner reinforcement panel 60 is disposed along the longitudinal direction of the opening 49 on the inside in the vehicle width direction of the opening 49.

The side sill 40 of the present embodiment is provided with the opening 49 as described above, and therefore, its rigidity is reduced. Since the door rail 55 is disposed along the longitudinal direction of the opening 49, rigidity near the opening 49 can be ensured. Furthermore, since the inner reinforcement panel 60 is disposed along the door rail 55 and the longitudinal direction (front-rear direction of vehicle) of the opening 49, an impact load can be efficiently absorbed by the inner reinforcement panel 60 at an easily deformable portion of the side sill 40.

In the present embodiment, a side bracket 81 is disposed so as to be spaced apart from and behind the inner reinforcement panel 60. The side bracket 81 is a plate-shaped member joined to the inner wall portion 47 of the upper inner panel 45 of the side sill 40, the inner wall portion 44 of the lower inner panel 41 of the side sill 40, and an outer wall portion 84 of the hanger member 82.

The side bracket 81 has a lower rigidity than the vehicle body frame and the hanger member 82, and therefore can deform so as to absorb impact load by a side collision. Note that since the side bracket 81 is joined to the hanger member 82, high rigidity in the up-down direction of the vehicle can be set. Therefore, the side bracket 81 can be used as a jack-up contact point.

The description of the present embodiment is an example for illustrating the present invention and does not limit the invention as claimed in the claims. Furthermore, the configuration of each part of the present invention is not limited to the embodiment, and various modifications can be made within the technical scope claimed in the claims.

For example, in the present embodiment, the inner reinforcement panel 60 includes the plate-shaped flat surface portion 61 extending continuously in the vehicle direction, but the invention is not limited to this. For example, a plurality of plates shorter in the front-rear direction of the vehicle than the flat surface portion 61 of the present embodiment may be disposed while being spaced apart from each other in the front-rear direction of the vehicle.

In the present embodiment, the upper outer panel 50 forming the side sill 40 functions as a footrest for occupants getting in and out of the vehicle through the door opening 27. Therefore, for example, the structure of the side sill 40 of the present embodiment is effective for a vehicle with a high floor portion. For example, in a vehicle with a so-called cab-over structure, in which the front seats (driver's and passenger's seats) are disposed on the upper side of the electric motor, the side sill 40 structure of the present embodiment is effective as a countermeasure against side collisions. Even in a vehicle in which the electric motor is disposed below the front seat, for example, if there is a space R (Figure 1) on the upper side of a front portion of the battery pack 10 on the lower side of the front seat, and any device is placed there, the structure of the side sill 40 of the present embodiment is effective as a countermeasure against side collisions.

### [Reference Signs List]

- 10: Battery pack
- 11: Upper surface portion
- 12: Side wall portion
- 13: Lower surface portion
- 14: Front wall portion
- 15: Rear wall portion
- 16: Side panel
- 17: Floor panel
- 18: Rear floor panel
- 20: Side member
- 20a: Reinforcement plate
- 20b: Reinforcement plate
- 21: Inner wall portion
- 21a: Inner flange portion
- 22: Outer wall portion
- 22a: Outer flange portion
- 23: Bottom surface portion
- 25: Upper reinforcement plate
- 25a: Flat surface portion
- 25b: Flange portion
- 26: Lower reinforcement plate
- 26a: Flat surface portion
- 26b: Flange portion
- 27: Door opening
- 28: Side body outer panel
- 30: Battery mounting member
- 31: Inner wall portion
- 31a: Flange
- 32: Outer wall portion
- 33: Bottom surface portion
- 34: Closing portion
- 35: Battery suspension bracket
- 36: Upper member
- 36a: Upper surface portion
- 36b: Inner wall portion
- 36c: Outer flange portion
- 37: Lower member
- 37a: Bottom surface portion
- 37b: Outer wall portion
- 37c: Inner flange portion
- 40: Side sill
- 41: Lower inner panel
- 42: Outer wall portion
- 43: Inclined surface portion
- 44: Inner wall portion
- 45: Upper inner panel
- 46: Bottom surface portion
- 47: Inner wall portion
- 47a: Upper flange portion
- 48: Outer wall portion
- 48a: Stepped portion
- 49: Opening
- 50: Upper outer panel
- 51: Upper flange portion
- 52: Rear flange portion
- 55: Door rail
- 60: Inner reinforcement panel
- 61: Flat surface portion
- 62: Vertical wall portion
- 63: Protrusion
- 71: First cross member
- 72: First central member
- 72f: Front flange portion
- 72r: Rear flange portion
- 73: First extension member
- 73a: Lower surface portion
- 73b: Vertical flange portion
- 73f: Front flange portion
- 73r: Rear flange portion
- 75: Second cross member
- 76: Second central member
- 77: Second extension member
- 81: Side bracket
- 82: Hanger member
- 84: Outer wall portion
- R: Space

## Claims

1. A side structure for an electric vehicle, comprising:
a battery pack disposed on a lower side of a floor portion of a vehicle;
a side member disposed on an outside in a vehicle width direction of the battery pack on the lower side of the floor portion and extending in a front-rear direction of the vehicle; and
a side sill that is disposed on the outside in the vehicle width direction of the side member while being spaced apart from the side member and extends in the front-rear direction of the vehicle, **characterized in that**:
the side structure comprises a battery mounting member joined to a lower portion of the side member to suspend the battery pack; and
the battery mounting member extends toward a lower side of the vehicle from a lower surface of the side member and extends in the front-rear direction of the vehicle.

2. The side structure for an electric vehicle according to claim 1, wherein
the side sill is disposed on the outside in the vehicle width direction of the battery mounting member, and
the side sill and the battery mounting member overlap in side view.

3. The side structure for an electric vehicle according to claim 1 or 2, wherein
upper portions of the battery mounting member are joined to lower portions of both side portions of the side member, and
a cross member extending in the vehicle width direction is disposed on the lower surface side of the floor portion, an outer side portion in the vehicle width direction of the cross member being joined to an inner side portion in the vehicle width direction of the side member.

4. The side structure for an electric vehicle according to claim 1 or 2, wherein:
the battery mounting member overlaps a part of the battery pack in side view;
a battery suspension bracket for suspending the battery pack is provided in a lower portion of the battery mounting member; and
the lower end of the battery pack is disposed on the lower side of the vehicle than the lower end of the battery mounting member.

5. The side structure for an electric vehicle according to claim 1 or 2, wherein an inner side portion in the vehicle width direction of the battery mounting member is inclined outward in the vehicle width direction from the lower end of the side member toward the lower side of the vehicle.
